# EUROPEAN PATENT APPLICATION

(11) **EP 4 641 367 A1**
(43) Date of publication of application: **29.10.2025**
(21) Application number: 25169717.3
(22) Date of filing: 10.04.2025
(51) Int. Cl.: G06F 3/16, G06F 8/38, G06F 9/451

(54) **INDUSTRIAL AUTOMATION DEVICE INTERFACE LEVERAGING GENERATIVE ARTIFICIAL INTELLIGENCE**

(30) Priority: 25.04.2024 US 202418646534
(71) Applicant: Rockwell Automation Technologies, Inc., Mayfield Heights, OH 44124 (US)
(72) Inventor: Anthony, Michael J., Mayfield Heights, OH, 44124 (US); Mills, Jonathan A., Mayfield Heights, OH, 44124 (US)
(74) Representative: Grünecker Patent- und Rechtsanwälte PartG mbB

(57) **Abstract**

Disclosed herein are methods and systems for an industrial automation device interface system that leverages generative artificial intelligence (GAI). The system receives a user request associated with an industrial device. The system processes the request to identify an intent and user interface functionality based at least on an industrial device context. When no existing user interface functionality is identified in the programming, the system generates a prompt designed to elicit a response from a generative artificial intelligence (GAI) model. The prompt contains industrial device context and a request to generate user interface functionality in the form of executable code for performing an action corresponding to the intent. The system submits the prompt to the GAI model and receives user interface functionality in return. The system executes the user interface functionality or provides it to the user device for execution.

## Description

### TECHNICAL FIELD

Various embodiments of the present technology generally relate to industrial automation systems and more specifically to industrial automation device interfaces that leverage generative artificial intelligence.

### BACKGROUND

Industrial devices carry out tasks in industrial environments. Industrial devices include any machinery or equipment used to perform actions relevant to industrial environments, including robots, conveyors, sorting machines, pick and place machines, computer numerical control (CNC) machines, and the like.

To interact with an industrial device, a user engages with a user interface. In many cases, the user interface is a graphical user interface rendered on a screen that provides options for interacting with the industrial device and viewing related output (e.g., information related to the industrial device). A graphical user interface of an industrial device may be rendered on a computational device affixed to or incorporated in the industrial device. In some cases, the graphical user interface may be rendered on a remote computational device. A user may interact with an industrial device for any number of reasons including to instruct the industrial device to begin a process, stop a process, change a process, provide information or data, receive information or data, change parameters, provide process control information, and the like. A user generally interacts with the user interface by physically inputting selections to the user interface via, for example, a touch screen or other input device (e.g., mouse, keyboard, and the like). Using this type of user interface, the user must be within arm's reach of the user interface and must have at least one hand available for inputting selections. The physical nature of inputting selections to a user interface is obstructive to users (e.g., technicians) that work with their hands such that their hands are otherwise occupied. Further, user interfaces often include menus that a user may navigate to identify a particular function the user desires. In some cases, the menus are tedious and difficult to navigate. Additionally, situations may arise in which a user wishes to obtain information or perform a function that does not exist in the user interface.

Accordingly, improvements are needed for interfacing with industrial devices.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes a method for creating user interface functionality. The method includes receiving, via a user interface, a request from a user, where the request is associated with an industrial device. The method further includes processing the request to identify an intent of the request based at least in part on a context of the industrial device. A prompt is generated that is designed to elicit a response from a generative artificial intelligence (GAI) model, where the prompt may include the context of the industrial device and a request to generate user interface functionality in the form of executable code for performing an action corresponding to the intent. The method also includes receiving, in response to submitting the prompt to the GAI model, the user interface functionality, and executing the user interface functionality.

In some embodiments of the technology, the method further includes searching preprogrammed functionality for the user interface functionality, for example, in a preprogrammed functionality database. In such embodiments, the prompt may be generated in response to the search returning a negative response.

In some embodiments, the request generated by a user is a spoken request. In some embodiments, the method further includes transmitting response instructions to a device providing the user interface. The response instructions may include instructions to emit a natural language audio signal associated with the user interface functionality via a speaker. In some embodiments, in response to receiving the spoken request, a voice recognition engine evaluates the spoken request. The evaluation may include correlating a voice identified from the spoken request with the user and an associated set of user credentials for the user, authenticating the user based on the user credentials, and translating the spoken request to a textual response.

In some embodiments, the method further includes performing an execution analysis for the requested user interface functionality based on the context of the industrial device, a set of user credentials associated with the user, the request, the user interface functionality, or a combination thereof. In some embodiments, the execution analysis may include determining whether a breach is identified and blocking execution of the user interface functionality based on identifying a breach or allowing execution of the user interface functionality based on determining there is no breach.

In some embodiments, the context of an industrial device includes the type of industrial device, the operations performed by the industrial device in the industrial process, parameters used by the industrial device, the status of the industrial device, the connectivity of the industrial device to other industrial devices, standard operating procedures associated with the industrial device, historical audit data for the industrial device, past interaction information for the industrial device, or a combination thereof.

In some embodiments, the action associated with performing the user interface functionality includes rendering modifications to the user interface, displaying a status for the industrial device in the user interface, determining a value for a metric of the industrial device, displaying a determined value for the metric in a user interface, triggering execution of a process of the industrial device, triggering entry into a predefined state (e.g., a safe state) of the industrial device, configuring a parameter of the industrial device, or a combination thereof. Other embodiments of this aspect include corresponding computer systems, apparatus, and computer programs recorded on one or more computer storage devices, each configured to perform the actions of the methods.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an application of an industrial automation device interface system in accordance with some embodiments of the present technology.
Figure 2 illustrates a method of operating an industrial automation device interface system with respect to the system of Figure 1 in accordance with some embodiments of the present technology.
Figure 3 illustrates an operational sequence of the system of Figure 1 in accordance with some embodiments of the present technology.
Figure 4 illustrates another method of operating an industrial automation device system with respect to the system of Figure 1 in accordance with some embodiments of the present technology.
Figure 5 illustrates an example prompt in accordance with some embodiments of the present technology.
Figure 6 illustrates an example computing system used in some embodiments of the present technology.

### DETAILED DESCRIPTION

As discussed above, existing user interfaces for industrial devices provide challenges to the user. In some cases, the user is a technician without free hands to navigate menus to find the relevant functionality in the user interface. In some cases, even with free hands, the menus and options available in the user interface may be cumbersome to navigate. Further, in some cases, the functionality needed is not exactly right or not offered at all.

To address these issues, the disclosure provided describes a system and methods for an industrial automation device user interface that includes functionality to receive a user input in forms including natural language, spoken input, typed input, menu selections, and the like. Once the input is received, the input is processed to determine the intent of the input. In the case of a menu selection, the input is not ambiguous, and the menu option is merely executed. In the case of a spoken or other natural language input, the natural language may first be processed or translated into instructions the system can interpret. The input may then further be processed by determining the intent of the user, whether the user is allowed to perform the function, and so forth. In some cases, the user may provide an input indicating functionality preprogrammed into the user interface. For example, the user may provide a spoken input requesting display of a gauge indicating a pressure value gathered by a sensor of the industrial automation device. The user interface may have a menu option that provides the gauge indicating the pressure value that the user could have found if the user had searched the menu options or otherwise navigated to the option. In such cases, the system may find the preprogrammed functionality in, for example, by searching the preprogrammed functionality. Once the functionality is identified, the system may execute the functionality to provide the requested information or behavior. In other cases, the request may be for information or behavior that is not programmed into the user interface. In such cases, the system may generate a prompt to elicit a response from a generative artificial intelligence (GAI) model. The prompt may request code that may be executed to provide the user interface functionality. The prompt may include information about the existing user interface, the industrial automation device, the language in which to generate the executable code, and so forth. The prompt may be submitted to the GAI model, and the system may receive the response, including the requested user functionality executable code. The system may execute the code to provide the user with the user interface functionality requested.

Advantageously, the described technology improves user interface functionality and useability. For example, the time, computing resources, and safety in an industrial automation environment are improved by efficiently identifying the intent of the user and implementing user interface functionality. When user interface functionality does not previously exist, the prompt to elicit code for executing such user interface functionality can be quickly and efficiently generated, and the resulting code is efficiently obtained and executed. The system improves efficiency in computing resource usage as the time and effort to generate quality code for execution in an industrial automation environment is reduced substantially from days and weeks to seconds or minutes.

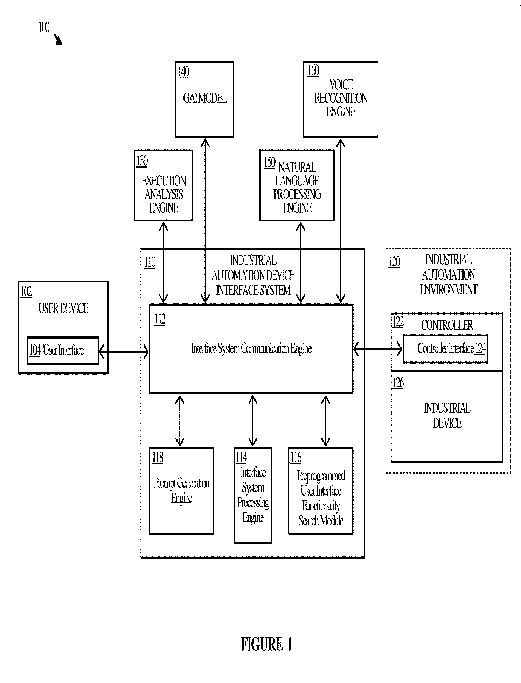

Now turning to the figures, **Figure 1** illustrates a system 100 in accordance with some embodiments of the present technology. System 100 includes user device 102, industrial automation device interface system 110, industrial automation environment 120, execution analysis engine 130, generative artificial intelligence (GAI) model 140, natural language processing engine 150, and voice recognition engine 160.

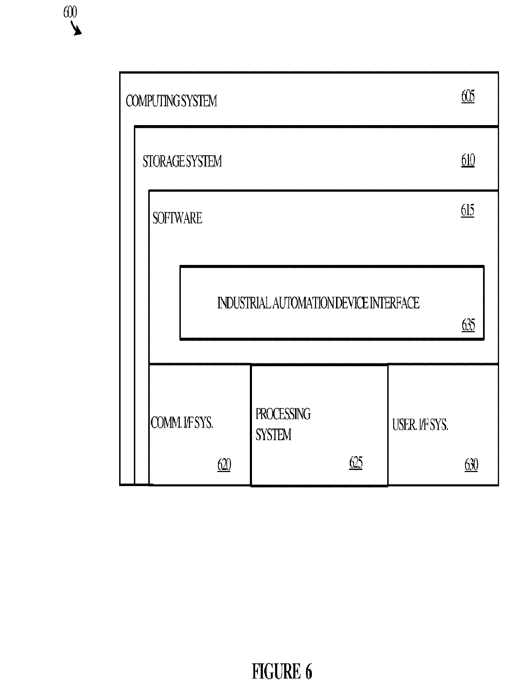

User device 102 is representative of a computing device sufficient to host a user interface. User device 102 could be one or more of software, firmware, or hardware, and could be a local computing device or a distributed computing device. Computing system 605 of Figure 6 is representative of a computing device sufficient to host a user interface. As some examples, user device 102 may be a computer, a laptop, a smartphone, or the like. While in Figure 1 user device 102 is illustrated as remote to industrial automation environment 120, user device 102 may be on the premises of industrial automation environment 120. For example, a human interface module associated with industrial device 126 may be user device 102. In some embodiments, user device 102 may be incorporated into industrial device 126 or controller 122. User device 102 hosts user interface 104. User interface 104 could be implemented in software, hardware, firmware, or a combination. User interface 104 may include a graphical user interface and is configured to receive requests from a user and provide information and other functionality, including, for example, sending instructions to controller 122 for executing actions by industrial device 126. Examples of the actions may include moving a component (e.g., a conveyor or arm) of industrial device 126, retrieving a value from a sensor of industrial device 126, or the like.

Industrial automation device interface system 110 provides functionality to receive and process requests from a user and to provide user interface functionality via user interface 104. Industrial automation device interface system 110 may be implemented in software, firmware, hardware, or a combination thereof. Industrial automation device interface system 110 may be hosted on a local computing device, on a cloud-based computing system, on a distributed computing system, or the like. In some embodiments, industrial automation device interface system 110 is hosted on a local computing device that may be located on the premises of industrial automation environment 120 or in a location remote to industrial automation environment 120. In some examples, industrial automation device interface system 110 may be integrated into controller 122 of industrial device 126 or directly into industrial device 126. Industrial automation device interface system 110 includes interface system communication engine 112, interface system processing engine 114, preprogrammed user interface functionality search module 116, and prompt generation engine 118.

Interface system communication engine 112 relays communications between the components of system 100. Interface system communication engine 112 may be implemented in software, firmware, hardware, or a combination thereof. Interface system communication engine 112 may be hosted on a local computing device, in a cloud-based computing system, on a distributed computing system, or the like. Interface system communication engine 112 is communicatively coupled with user interface 104, interface system processing engine 114, preprogrammed user interface functionality search module 116, prompt generation engine 118, execution analysis engine 130, execution analysis engine 130, GAI model 140, natural language processing engine 150, and voice recognition engine 160.

Interface system processing engine 114 receives requests from interface system communication engine 112. The requests are routed to interface system processing engine 114 to determine the intent of the request and determine whether other component processing is needed. For example, for a request submitted verbally (i.e., a spoken request), natural language processing engine 150 may need to first translate the request. As such, interface system processing engine 114 may relay the request to interface system communication engine 112 with instructions to route the request to natural language processing engine 150. Further, spoken requests may be transmitted by interface system processing engine 114 to voice recognition engine 160 via interface system communication engine 112 to obtain user credentials associated with the user based on the user's voiceprint. When the user accesses user interface 104 via other methods (e.g., not spoken), the user may enter login credentials that are used to identify the user credentials by interface system processing engine 114. In some embodiments, the user credentials are provided to relevant components (e.g., execution analysis engine 130) with the request or generated code for the relevant component to perform its task. Interface system processing engine 114 may determine the intent of the request by, for example, parsing the request to identify keywords. In some embodiments, interface system processing engine 114 may include a machine learning model or algorithm that processes the request to identify an intent. In some embodiments, natural language processing engine 150 may translate the request in a way that identifies the intent. In some cases, the intent may include the action the user is requesting. As some examples, the user may be requesting specific information (e.g., energy consumption), requesting industrial device 126 to perform a physical activity or begin a process (e.g., move a conveyor forward), requesting submission of particular information (e.g., setting a parameter), or the like. Interface system processing engine 114 may generate a request for the action and route the request to preprogrammed user interface functionality search module 116 via interface system communication engine 112. If preprogrammed user interface functionality search module 116 returns a positive result (e.g., the executable code or a pointer to the location in the user interface for executing the functionality), interface system processing engine 114 may execute the code and transmit the resulting output to user interface 104 in some embodiments. In some embodiments, interface system processing engine 114 may transmit the executable code or the pointer to user interface 104 for executing on user device 102. If preprogrammed user interface functionality search module 116 returns a negative result interface system processing engine 114 sends a request for a prompt to prompt generation engine 118. The request for the prompt may include, for example, the intent of the request, a context for the industrial device associated with the request, context information about the user interface, a set of user credentials, and the like. In response, interface system processing engine 114 may receive the prompt and transmit it, via interface system communication engine 112, to GAI model 140. GAI model 140 may return a response including executable code that provides the requested user interface functionality. Interface system processing engine 114 may pass the executable code, via interface system communication engine 112, to execution analysis engine 130 for analysis to determine if a breach is identified. If no breach is identified, interface system processing engine 114 may execute the code and provide the output to user interface 104. In some embodiments, when no breach is identified interface system processing engine 114 sends the executable code, via interface system communication engine 112, to user interface 104 for execution on user device 102. If a breach is identified, interface system processing engine 114 may block execution of the code and, in some cases, return an error for communication to the user via user interface 104. Interface system processing engine 114 may be implemented in software, firmware, hardware, or a combination thereof. Interface system processing engine 114 may be hosted on a local computing device, on a cloud-based computing system, on a distributed computing system, or the like.

Preprogrammed user interface functionality search module 116 evaluates the request for the action sent from interface system processing engine 114 and searches existing user interface functionality to determine if any preprogrammed functionality satisfies the identified user interface functionality (e.g., the intent or the action) of the request. For example, preprogrammed user interface functionality search module 116 may include a copy of the software or code of user interface 104. The search may find within the code where the functionality exists. In some embodiments, the relevant section of executable code is returned for execution. In some embodiments, a pointer to, for example, the menu option or a pointer to a function or object for performing the requested action is returned. In some cases, the requested functionality is not included in user interface 104, and a negative result is returned. Preprogrammed user interface functionality search module 116 may be implemented in software, firmware, hardware, or a combination thereof. Preprogrammed user interface functionality search module 116 may be hosted on a local computing device, on a cloud-based computing system, on a distributed computing system, or the like.

Prompt generation engine 122 receives the request to generate a prompt from interface system processing engine 114 via interface system communication engine 112. The request to generate the prompt may include the intent of the request, the context of industrial device 126 or controller 122 associated with the request, context of user interface 104, a set of credentials associated with the user, or the like, or any combination thereof. Context of user interface 104 may include, for example, information about the codebase of user interface 104 including, for example, variables or values associated with the intent of the request, variables or values associated with industrial device 126, variables or values associated with controller 122, the programming language, and so forth. Prompt generation engine 122 generates a prompt that is designed to elicit a response from GAI model 140 to provide executable code to incorporate into user interface 104 that will provide the requested user interface functionality requested by the user. In some embodiments, prompt generation engine 118 uses a prompt template to generate the prompt. Prompt generation engine 118 may generate a prompt that incorporates the contextual information of industrial device 126, controller 122, user interface 104, or a combination thereof. The prompt may include the context for the industrial device and a request to generate user interface functionality in the form of executable code for performing an action corresponding to the intent. For example, the prompt may explicitly request a complete executable module in a given programming language that may utilize APIs of controller 122, industrial device 126, user interface 104, or any combination, to perform actions or otherwise provide the requested user interface functionality. Prompt generation engine 122 may be implemented in software, firmware, hardware, or a combination thereof. Prompt generation engine 122 may be hosted on a local computing device, on a cloud-based computing system, on a distributed computing system, or the like.

Industrial automation environment 120 is representative of an industrial automation environment (e.g., a factory floor) in which industrial automation devices including industrial device 126 operate. Industrial automation environment 120 may be a manufacturing facility, a fabrication facility, a warehouse facility, or the like. Industrial automation environment 120 includes controller 122 and industrial device 126. Controller 122 further includes controller interface 124. While a single controller and industrial device are depicted for ease of description, any number of controllers and industrial devices may be included in industrial automation environment 120, and any number of other components, computing systems, and the like may also be included in industrial automation environment 120.

Controller 122 is representative of any computational device sufficient to execute control logic configured to govern the function of industrial device 126. Controller 122 may be, for example, a programmable logic controller (PLC). Controller 122 may control industrial device 126 in addition to other industrial devices, in some embodiments. Controller 122 may be affixed to industrial device 126, incorporated into industrial device 126, coupled via one or more cables to industrial device 126, or the like. Controller 122 may include controller interface 124.

Controller interface 124 is representative of an interface hosted on a logic controller (e.g., controller 122) that facilitates communication between the logic controller and peripheral components. Controller interface 124 may be implemented in software, firmware, hardware, or a combination thereof. Controller interface 124 may, in some embodiments, be a separate computing device (e.g., a human interface machine (HIM)).

Industrial device 126 may be representative of any industrial device found in industrial automation environment 120 including, for example, switches, conveyors, drives, robotic components (e.g., robotic arms), sorting machines, pick and place machines, and the like. User interface 104 provides interface functionality related to industrial device 126.

Execution analysis engine 130 provides functionality for checking whether execution of the action requested in the user interface functionality is acceptable or whether a breach will occur if executed. For example, execution analysis engine 130 may analyze security of the action based on user credentials to determine whether the requesting user has sufficient security clearance to execute the action. As another example, execution analysis engine 130 may analyze the action in the context of industrial automation environment 120 to determine whether executing the action may cause a safety issue within industrial automation environment 120. As yet another example, execution analysis engine 130 may analyze the action to determine whether the action is possible (e.g., whether industrial device 126 has the requisite functionality, whether the requisite data is available, or the like). The execution analysis performed by execution analysis engine 130 is an evaluation of the user interface functionality based on one or more of the context of the industrial device, a set of user credentials associated with the user, the request, and the user interface functionality. In some embodiments, execution analysis engine 130 receives the executable code generated by GAI model 140 and executes the executable code in a sandbox environment, a simulated environment, or a combination. Execution analysis engine 130 may generate a result indicating a breach when an issue is identified in the execution analysis or indicating no breach when no issues are identified. Industrial automation device interface system 110 may block execution of the user interface functionality in user interface 104 or by interface system processing engine 114 in response to the execution analysis identifying a breach. Execution analysis engine 130 may be implemented in software, firmware, hardware, or a combination thereof. Execution analysis engine 130 may be hosted on a local computing device, on a cloud-based computing system, on a distributed computing system, or the like. In some embodiments, execution analysis engine 130 may be hosted within industrial automation device interface system 110.

GAI model 140 is a generative artificial intelligence model that may be trained to provide particular functionality described herein. GAI model 140 may be hosted on a local computing device, on a cloud-based computing system, on a distributed computing system, or the like. GAI model is trained and configured to, in response to receiving a context of industrial device 126 and a request for user interface functionality for performing an action corresponding to the intent of the request, generate executable code for performing the action requested. GAI model 140 may be trained on known industry standards and practices, internal documentation, device documentation, and the like.

Generative artificial intelligence (GAI) models (also known as foundation models) are models trained to generate new data based on a training dataset. GAI models as used herein include large-scale generative artificial intelligence (AI) models trained on massive quantities of diverse, unlabeled data. The GAI models learn using self-supervised, semi-supervised, or unsupervised techniques. GAI models perform many downstream tasks based on capturing general knowledge, semantic representations, and patterns and regularities in the training data. In some embodiments, such as embodiments included herein, a GAI model may be fine-tuned for specific downstream tasks. GAI models include BERT (Bidirectional Encoder Representations from Transformers) and ResNet (Residual Neural Network). GAI models may be based on any relevant architecture, including, for example, generative adversarial networks (GANs), variational auto-encoders (VAEs), and transformer models, including multimodal transformer models. Depending on the type of input accepted and output provided, GAI models may be multimodal or unimodal.

Multimodal models are a class of GAI model that accept multimodal data including text, image, video, and audio data. Multimodal models may leverage techniques like attention mechanisms and shared encoders to fuse information from different modalities and create joint representations. Learning joint representations across different modalities enables multimodal models to generate multimodal outputs that are coherent, diverse, expressive, and contextually rich. For example, multimodal models can generate a caption or textual description of a given image by extracting visual features using an image encoder, then feeding the visual features to a language decoder to generate a descriptive caption. Similarly, multimodal models can generate an image based on a text description (or, in some scenarios, a spoken description transcribed by a speech-to-text engine). Multimodal models work in a similar fashion with video-generating a text description of the video or generating video based on a text description.

Multimodal models include visual-language foundation models, such as CLIP (Contrastive Language-Image Pre-training), ALIGN (A Large-scale ImaGe and Noisy-text embedding), and ViLBERT (Visual-and-Language BERT), for computer vision tasks. Examples of visual multimodal or foundation models include DALL-E, DALL-E 2, Flamingo, Florence, and NOOR. Types of multimodal models may be broadly classified as or include cross-modal models, multimodal fusion models, and audio-visual models, depending on the particular characteristics or usage of the model.

Large language models (LLMs) are a type of GAI model that process and generate natural language text. These models are trained on massive amounts of textual data. LLMs learn to generate relevant responses given a prompt or input text. The responses are coherent and contextually relevant to the given prompt. LLMs understand and generate sophisticated language based on their training. LLMs capture intricate patterns, semantics, and contextual dependencies in textual data. In some cases, LLMs may be used in multimodal models. For example, the LLM intelligence is used to combine images and audio input with textual input to generate multimodal output. Types of LLMs include language generation models, language understanding models, and transformer models.

Transformer models, including transformer-type foundation models and transformer-type LLMs, are a class of deep learning models used in natural language processing (NLP). Transformer models are based on a neural network architecture which uses self-attention mechanisms to process input data and capture contextual relationships between words in a sentence or text passage. Transformer models weigh the importance of different words in a sequence, allowing them to capture long-range dependencies and relationships between words. GPT (Generative Pre-trained Transformer) models, BERT (Bidirectional Encoder Representations from Transformer) models, ERNIE (Enhanced Representation through kNowledge IntEgration) models, T5 (Text-to-Text Transfer Transformer), and XLNet models are types of transformer models which have been pretrained on large amounts of text data using a self-supervised learning technique called masked language modeling. For example, large language models, such as ChatGPT and its brethren, have been pretrained on an immense amount of data across virtually every domain of the arts and sciences. This pretraining allows the models to learn a rich representation of language that can be fine-tuned for specific NLP tasks, such as text generation, language translation, or sentiment analysis. Moreover, these models have demonstrated emergent capabilities in generating responses that are creative, openended, and unpredictable.

Natural language processing engine 150 uses natural language processing models to translate a natural language input into actionable events understood by, for example, interface system processing engine 114. For example, when interface system processing engine 114 receives a natural language request (e.g., spoken or otherwise entered in a non-structured format) from a user via user interface 104, interface system processing engine 114 uses interface system communication engine 112 to relay the natural language input to natural language processing engine 150. Natural language processing engine 150 translates the natural language input into actions or intents understandable by interface system processing engine 114. For example, if a user speaks to user interface 104 and states "jog forward three clicks," natural language processing engine 150 translates that into instructions that include the name of the industrial device 126 as well as instructions that perform an action equivalent to jogging forward three clicks. In some embodiments, the intent and actions identified by natural language processing engine 150 may be used by interface system processing engine 114 to identify intent and actions requested via user interface 104. Natural language processing engine 150 may be hosted on a local computing device, on a cloud-based computing system, on a distributed computing system, or the like.

Voice recognition engine 160 uses machine learning algorithms and other artificial intelligence to capture a voiceprint of spoken requests and compare it with stored voiceprints to identify a user associated with the voice. Once the user is identified, a set of user credentials may be captured and returned to interface system processing engine 114. Voice recognition engine 160 may be hosted on a local computing device, on a cloud-based computing system, on a distributed computing system, or the like.

In use, a user generates a request, for example, by verbally instructing user interface 104 to perform a functionality. As one example of a functionality, industrial device 126 is a conveyor, and the request from the user is an instruction to render on user interface 104 a visual depiction of historical energy consumption for industrial device 126. The request is received at user interface 104 and sent to industrial automation device interface system 110, where it is received at interface system communication engine 112. Interface system processing engine 114 receives and evaluates the request to identify any degree of natural language included in the instruction. Here, the request includes natural language, so interface system processing engine 114 relays the request to natural language processing engine 150 via interface system communication engine 112. Natural language processing engine 150 receives the request via interface system communication engine 112 along with instructions to translate the request and returns a translated request.

The translated request is then sent back to interface system processing engine 114 via interface system communication engine 112 for intent determination. Interface system processing engine 114 processes the request based in part of the context of industrial device 126 to determine the intent of the request. The intent of the request and the context of the request are used to determine an action corresponding to the intent. In this case, the intent is to display data, and the action is more specifically to display historical energy consumption of industrial device 126 in user interface 104.

Because the request was spoken, interface system processing engine 114 relays the request to voice recognition engine 160 via interface system communication engine 112 to obtain user credentials associated with the voice of the user. In some embodiments, the user may enter login credentials that interface system processing engine 114 may use to identify the related user credentials that provide details on the security access, policies, and the like associated with the user.

Interface system processing engine 114 creates a search request to search preprogrammed functionality for performing the requested action and transmits the search request to preprogrammed user interface functionality module 116. For example, the search request may include the action and the context of industrial device 126. In response to receiving the search request, preprogrammed user interface functionality search module 116 determines whether any preprogrammed functionality achieves the user interface functionality for the action corresponding to the intent. In an example where the request includes no natural language component, preprogrammed user interface functionality module 116 may receive the request without any translation. In the ongoing example, no preprogrammed user interface functionality achieves the action (i.e., display of historical energy consumption of industrial device 126). Preprogrammed user interface functionality search module 116 returns a negative result. When preprogrammed user interface functionality is identified, executable code may be returned, a pointer to the location in the code may be returned, or the like.

Interface system processing engine 114 requests a prompt from prompt generation engine 118 after receiving the negative result. The request for the prompt may include the action requested and associated context information for the requested action, the intent and associated context of the intent, context information for industrial device 126 (e.g., industrial device 126 device type, location, process information, and the like), context information for user interface 104 (e.g., programming language, relevant variable names such as for industrial device 126, and the like), user credential information, and the like. At prompt generation engine 118, information and request for the prompt are processed. Prompt generation engine 118 creates a prompt designed to elicit a response from GAI model 140 including the action corresponding to the intent of the request in the form of executable code. The prompt includes the request for the executable code and relevant contextual information provided by interface system processing engine 114. The generated prompt is returned to interface system processing engine 114. Interface system processing engine 114 may evaluate the prompt and submit it, via interface system communication engine 112, to GAI model 140.

GAI model 140 receives the prompt, and in response, generates executable code for the desired user interface functionality. The executable code is returned to interface system processing engine 114. Interface system processing engine 114 submits the executable code to execution analysis engine 130 along with user credentials for evaluation. After analysis, execution analysis engine 130 returns a response indicating whether a breach was identified. If no breach was identified, interface system processing engine 114 may execute the code and submit the output to user interface 104 for displaying the historical energy consumption. In some embodiments, interface system processing engine 114 may provide the executable code to user interface 104 for execution on user device 102.

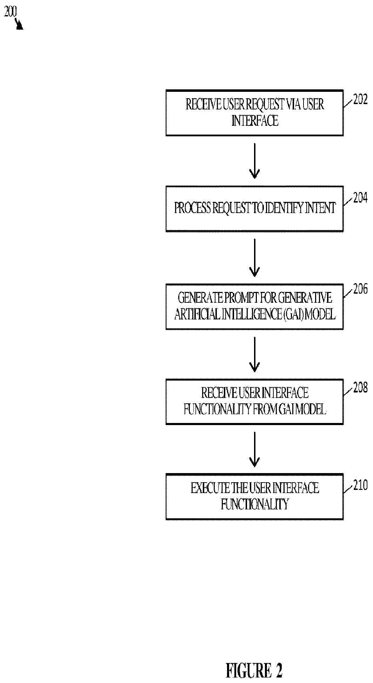

**Figure 2** illustrates a method 200 of processing a request (e.g., a command) by system 100.

At step 202, the system (e.g., industrial automation device interface system 110) receives a request from a user via a user interface (e.g., user interface 104 of user device 102). The request is associated with an industrial device (e.g., industrial device 126) and in some cases, the user is associated with a set of user credentials. In an example, the user interface receives a request is to advance a conveyor device an incremental amount. Continuing the example, the user that submitted the request is associated with user credentials giving them the general authority to advance conveyor devices. The user interface relays the request to an industrial automation device interface system, such as industrial automation device interface system 110.

At step 204, the industrial automation device interface system processes the request to identify the intent of the request. Identifying the intent of the request is based at least in part on the context of the industrial device. For example, interface system processing engine 114 analyzes the request to identify the intent. The intent of the request indicates what the user would like to do or accomplish, and a corresponding action may be identified to accomplish the intent of the request. Identifying the intent of the request is performed with regard to the context of the industrial device associated with the request. Where for example, a request is received that instructs a conveyor to advance forward one unit, the intent of the request is that the person having generated the request desires an incremental advancement of a particular moving industrial device. This determination is facilitated by an understanding contextual information for the industrial device, including the industrial device's type, abilities, roles, and relationships to other industrial devices. Contextual information can be gathered from a number of sources including device documentation, internal enterprise documentation, user input, and the like. In an example, a request is received to spool up a motor. The industrial device associated with the request is the motor. The context for the industrial device is that the device is a motor, operates within a defined performance range, is responsible for powering a material handling device, to which it is coupled. The context of the device here informs the intent of the request. Without considering the context of the industrial device, the intent of the request could simply be to spool a motor. With the context of the industrial device, the intent of the request becomes inferably broader, as the starting of the motor may in fact be the execution of a larger process carried out on interconnected industrial devices.

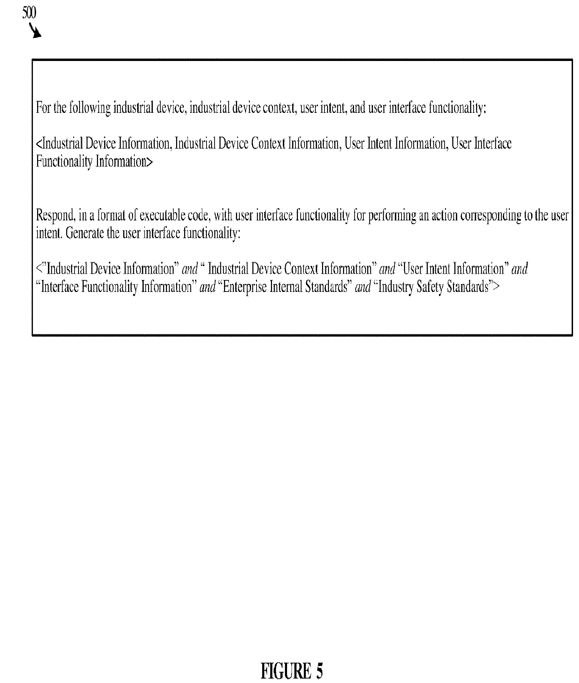

At step 206, in response to receiving at least the context of the industrial device and the intent of the request, the device interface system generates a prompt designed to elicit a response from a generative artificial intelligence (GAI) model (e.g., GAI model 140). The prompt may be provided by a prompt generation engine, such as prompt generation engine 118 of Figure 1. The prompt contains the context of the industrial device and a request to generate user interface functionality in the form of executable code for performing an action corresponding to the intent. To generate the prompt, a prompt template (e.g., prompt template 500 of Figure 5) may be used. Continuing the example where a request is received to spool a motor, the request and the industrial device context are received at a prompt generation engine. In response, the prompt generation engine generates a prompt that includes the context of the industrial device and instructions to provide user interface functionality for performing an action corresponding to the intent of the request. The prompt is designed to elicit the desired response from the GAI model by including explicit requests and specific contextual information used by the GAI model to generate the response. The instructions in the prompt direct the model to provide the user interface functionality in the form of executable code that, when executed, causes the action to occur. The action may be, for example, spooling the motor in the present example. Other examples of actions may be to display specific information in user interface 104, set parameters in industrial device 126, modify or update control code in controller 122, or the like. Continuing the example, the prompt generation engine requests user interface functionality in the form of executable code that, when executed, causes the motor to spool.

At step 208, in response to submitting the prompt to the GAI model, the industrial automation device interface system receives user interface functionality in return. For example, interface system processing engine 114 may submit the prompt and receive the response. The user interface functionality contains executable code, that, when executed, causes the user interface to perform the user interface functionality corresponding to the action of the request.

At step 210, the industrial automation device interface system executes the user interface functionality. In some cases, the industrial automation device interface system generates a response in the form of a natural language audio signal and acknowledges that the request has been processed and informs the user of any resulting action. In such cases, instructions to emit the audio signal from a speaker of user device 102 are sent to user device 102 and processed by user interface 104. In the ongoing example, the industrial automation device interface system may respond to the user with a natural language response indicating that the request has been processed and that the spooling of the motor is initiated. Examples of executing the user interface functionality include providing a visual depiction of a state or value for an industrial machine, triggering a process in an industrial machine, adjusting a parameter for an industrial machine, and the like. In some cases, executing the user interface functionality includes an execution analysis. For example, execution analysis engine 130 may analyze the code before allowing execution. The execution analysis may be based on one or more of a context of the industrial device, a set of user credentials associated with the user, the request, and the user interface functionality. In some cases, execution of the user interface functionality is blocked in response to the outcome of the execution analysis indicating a breach. For example, the user may not have sufficient credentials authorized to perform the action. As another example, execution of the user interface functionality may generate a safety risk due to physical movement of industrial device 126. In the present example, no breach is detected, and interface system processing engine 114 may send instructions to industrial device 126 and/or controller 122 to spool up the motor. In some embodiments, rather than executing the code, interface system processing engine 114 may transmit the code to user interface 104 for executing on user device 102, such that user device 102 may transmit instructions directly to or via industrial automation device interface system 110 to controller 122 to spool the motor.

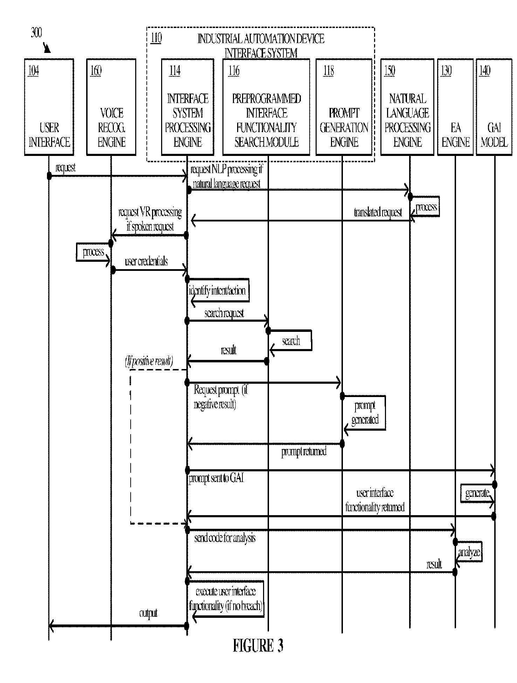

**Figure 3** illustrates an operational scenario 300 with respect to system 100 in an implementation. While other operational scenarios are possible, operational scenario 300 provides one exemplary scenario. User interface 104 receives a request from a user and relays the request to industrial automation device interface system 110, and particularly to interface system processing engine 114. The request relates to performing user interface functionality specific to industrial device 126. The request may be associated with a user who is associated with a set of user credentials.

Upon receiving the request, interface system processing engine will determine whether NLP processing is needed, and if so, send the request for NLP processing to natural language processing engine 150. Natural language processing engine 150 will process the request and return the translated request. Further, if interface system processing engine 114 determines voice recognition processing is needed, the request is sent for voice recognition processing to voice recognition engine 160. Voice recognition engine 160 processes the request and may return user credentials associated with the voice of the speaker.

Interface system processing engine 114 processes the request to identify the intent of the request. Identifying the intent of the request is performed in part based on a context of the industrial device, which may include information such as type of industrial device, parameters for the industrial device, protocols for the industrial device, relationships to other industrial devices and systems, standard operating procedures (SOPs), historical audit data, past interactions, and the like. Upon identifying the intent of the request, interface system processing engine 114 may also identify an action correlated to the intent. In other words, interface system processing engine 114 may determine an action that may be performed to accomplish the intent of the request.

Interface system processing engine 114 transmits a search request to preprogrammed interface functionality search module 116 to search for existing user interface functionality that performs the action. For example, a user may not be able to find a menu option or have the ability to search the menus (e.g., the user's hands are full or busy otherwise), so the user may submit a natural language request to ask the system to find or generate the requested result. In such cases, the functionality may already exist in user interface 104. Preprogrammed interface functionality search module 116 may search for the user interface functionality and identify the relevant portion of code, return the code, return a pointer, or otherwise indicate a process to execute the existing functionality. If a positive result is returned from preprogrammed interface functionality search module 116, the code or an indication of the code may be sent to execution analysis engine 130 for analysis, skipping several steps. If, however, a negative result is returned, indicating the user interface functionality is not in the preprogrammed options, interface system processing engine 114 proceeds with several intervening steps next described.

When the response is negative, indicating no preprogrammed user interface functionality that accomplishes the requested action exists, interface system processing engine 114 requests a prompt from prompt generation engine 118. Prompt generation engine 118 generates the prompt. The prompt is designed to elicit a response from generative artificial intelligence (GAI) model 140 that includes the requested user interface functionality in the form of executable code. Prompt generation engine returns the prompt to interface system processing engine 114.

Interface system processing engine sends the prompt to GAI model 140, which generates the requested executable code and returns it to interface system processing engine 114. At this point, interface system processing engine 114 has code generated by GAI model 140 or the positive response from preprogrammed interface functionality search module, and the two branches converge. In either case, interface system processing engine 114 sends the code, or the pointer to the code in some cases, to execution analysis engine 130 for analysis. In some cases, user credentials, context information, the request, or other relevant information may also be sent to execution analysis engine 130. Execution analysis engine 130 analyzes the code to determine whether there is a breach. For example, the breach may be a security breach (e.g., the user is not authorized to perform the requested action), a safety breach (e.g., performing the action may create a physical, environmental, cyber, or other type of safety risk), or the like. In some embodiments, execution analysis engine 130 may execute the code in a sandbox environment, a simulated environment, or the like. Execution analysis engine 130 returns the result indicating whether a breach is identified or not.

Interface system processing engine 114 receives the result from execution analysis engine 130 and may determine whether to allow execution of the user interface functionality based on whether a breach is identified. If a breach is identified, execution may be blocked, a warning may be issued, an alert may be generated, a notification may be transmitted to a relevant administrator or factory manager, or the like. If a breach is not identified, interface system processing engine 114 may execute the user interface functionality. The output from the execution may be transmitted to user interface 104. In some embodiments, though not shown, executing the user interface functionality may include communicating with industrial device 126, controller 122, controller interface 124, user interface 104, or any combination. In some embodiments, the code may be transmitted to user interface 104 for execution on user device 102. In such embodiments, user device 102 may communicate directly with controller 122, controller interface 124, industrial device 126, or any combination, or user device 102 may communicate via industrial automation device interface system 110 with controller 122, controller interface 124, industrial device 126, or any combination.

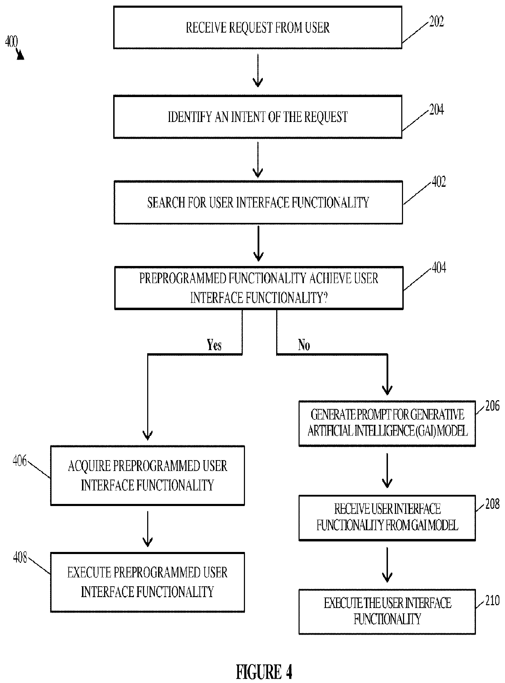

**Figure 4** illustrates another method 400 of operating system 100 in accordance with some embodiments of the present technology. Method 400 includes step 202, step 204, step 206, step 208, step 210, and step 212. Each of step 202, step 204, step 206, step 208, step 210, and step 212 are explained in the associated text to Figure 2. Method 400 further includes step 402, step 404, step 406, and step 408. The embodiment described in method 400 and the embodiment previously described in method 200 are similar except method 400 includes additional detail and optional steps.

At step 202, system 100 receives a request from a user via a user interface (e.g., user interface 104). The request is associated with an industrial device (e.g., industrial device 126) and in some cases, the user is associated with a set of user credentials. Step 202 is described in greater detail in the associated text to Figure 2.

At step 204, the device interface system processes the request to identify an intent of the request. Identifying the intent of the request is based at least in part on the context of the industrial device. Step 204 is described in greater detail in the associated text to Figure 2.

At step 402, a search for the user interface functionality of the request is performed. For example, interface system processing engine 114 queries preprogrammed user interface functionality search module 116 to determine if any existing processes achieve the desired user interface functionality. If no preprogrammed user interface functionality is identified or none is identified that achieves the desired action, method 400 continues to step 206 and proceeds through step 206, step 208, step 210, and step 212 in the same way that method 200 proceeds. When, however, preprogrammed user interface functionality that achieves the desired user interface functionality is identified, method 400 proceeds to step 406.

At step 406, interface system processing engine 114 acquires the preprogrammed user interface functionality, which may include executable code relating to an action associated with performing the user interface functionality, a pointer to executable code, or the like. At step 408, the preprogrammed user interface functionality is executed. For example, interface system processing engine 114 may deploy the preprogrammed user interface functionality by sending the user interface functionality to user interface 104 via interface system communication engine 112 for execution at user device 102. Alternatively, interface system processing engine 114 may execute the user interface functionality and provide relevant output to user interface 104.

**Figure 5** illustrates example prompt 500 used in some examples in accordance with some embodiments of the present technology. Prompt 500 is representative of a textual input configured to elicit a response from an artificial intelligence model. Where system 100 fails to identify preprogrammed user interface functionality that achieves the user interface functionality, prompt 500. Prompt 500 includes information about the industrial device associated with the request, the context of the industrial device, the intent of the request, and the user interface functionality. For example, prompt 500 could include industrial device information describing industrial device 126 as a conveyor, industrial device context information describing the conveyor as one link in a chain of many conveyors, user intent information describing the desire trigger a safe state of the conveyor and display the state, and user interface functionality information describing the actions needed to trigger the conveyor's safe state and display the state. Prompt 500 further includes a request directing GAI model 140 to return user interface functionality in the form of executable code with respect to the elements of the prompt.

In response to receiving prompt 500, GAI model 140 returns the desired user interface functionality in the form of executable code. Continuing the previous example, GAI model 140 returns executable code that triggers a safe state in industrial device 126 and displays the status of industrial device 126 on user interface 104.

**Figure 6** illustrates example computing system 600 used in some embodiments of the present technology. Computing system 605 is representative of a computing device sufficient to execute software and communicate with peripherals. Computing system 605 is representative of any system or collection of systems with which the various operational architectures, processes, scenarios, and sequences disclosed herein for implementation of an industrial automation device interface system may be employed. Computing system 605 may be implemented as a single apparatus, system, or device or may be implemented in a distributed manner as multiple apparatuses, systems, or devices. Computing system 605 includes, but is not limited to, processing system 625, storage system 610, software 615, communication interface system 620, and user interface system 630. Processing system 625 is operatively coupled with storage system 610, communication interface system 20, and user interface system 630. Computing system 605 may be representative of a cloud computing device, distributed computing device, or the like.

Processing system 625 loads and executes software 615 from storage system 610. Software 615 includes and implements industrial automation device interface system 635. When executed by processing system 625 to automated anomaly detection and resolution, software 615 directs processing system 625 to operate as described herein for at least the various processes, operational scenarios, and sequences discussed in the foregoing implementations. Computing system 605 may optionally include additional devices, features, or functionality not discussed for purposes of brevity.

Processing system 625 may comprise a micro-processor and other circuitry that retrieves and executes software 615 from storage system 610. Processing system 625 may be implemented within a single processing device but may also be distributed across multiple processing devices or sub-systems that cooperate in executing program instructions. Examples of processing system 625 include general purpose central processing units, graphical processing units, application specific processors, and logic devices, as well as any other type of processing device, combinations, or variations thereof.

Storage system 610 may comprise any computer readable storage media readable by processing system 625 and capable of storing software 615. Storage system 610 may include volatile and nonvolatile, removable, and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations, storage system 610 may also include computer readable communication media over which at least some of software 615 may be communicated internally or externally. Storage system 610 may be implemented as a single storage device but may also be implemented across multiple storage devices or sub-systems co-located or distributed relative to each other. Storage system 610 may comprise additional elements, such as a controller capable of communicating with processing system 625 or other systems.

Software 615 (including industrial automation device interface system 635) may be implemented in program instructions and, when executed by processing system 625, can direct processing system 625 to operate as described with respect to the various operational scenarios, sequences, and processes illustrated herein. For example, software 615 may include program instructions for implementing an industrial automation device interface system.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 615 may include additional processes, programs, or components, such as operating system software, virtualization software, or other application software. Software 615 may also comprise firmware or some other form of machine-readable processing instructions executable by processing system 625.

In general, software 615 may, when loaded into processing system 625 and executed, transform a suitable apparatus, system, or device (of which computing system 605 is representative) overall from a general-purpose computing system into a special-purpose computing system customized to provide automated anomaly detection and resolution as described herein. Indeed, encoding software 615 on storage system 610 may transform the physical structure of storage system 610. The specific transformation of the physical structure may depend on various factors in different implementations of this description. Examples of such factors may include, but are not limited to, the technology used to implement the storage media of storage system 610 and whether the computer-storage media are characterized as primary or secondary storage, as well as other factors.

For example, if the computer readable storage media are implemented as semiconductor-based memory, software 615 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 620 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The media, connections, and devices are well known and need not be discussed at length here.

Communication between computing system 605 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The communication networks and protocols are well known and need not be discussed at length here.

While some examples provided herein are described in the context of an industrial environment, it should be understood that the industrial automation device interface system systems and methods described herein are not limited to such embodiments and may apply to a variety of other industrial environments and their associated systems. As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number, respectively. The word "or," in reference to a list of two or more items, covers all of the following interpretations of the word: any of the items in the list, all of the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

### The following is a list of further preferred embodiments of the invention:

Embodiment 1. A method, comprising:
   receiving, via a user interface, a request from a user, wherein the request is associated with an industrial device;
   processing the request to identify an intent of the request based at least in part on a context of the industrial device;
   generating a prompt designed to elicit a response from a generative artificial intelligence (GAI) model, wherein the prompt comprises:
      the context of the industrial device, and
      a request to generate user interface functionality in the form of executable code for performing an action corresponding to the intent;
      receiving, in response to submitting the prompt to the GAI model, the user interface functionality; and
      executing the user interface functionality.
Embodiment 2. The method of embodiment 1, further comprising:
   searching preprogrammed functionality for the user interface functionality, wherein the generating the prompt is in response to the searching the preprogrammed functionality returning a negative response.
Embodiment 3. The method of embodiment 1, wherein the request comprises a spoken request.
Embodiment 4. The method of embodiment 3, wherein executing the user interface functionality comprises:
   transmitting, to a device providing the user interface, response instructions to emit a natural language audio signal associated with the user interface functionality via a speaker communicatively coupled to the device.
Embodiment 5. The method of embodiment 3, further comprising:
   in response to receiving the spoken request, evaluating, by a voice recognition engine, the spoken request, wherein the evaluating comprises:
   correlating a voice identified from the spoken request with the user and an associated set of user credentials for the user;
   authenticating the user based on the user credentials; and
   translating the spoken request to a textual request.
Embodiment 6. The method of embodiment 1, further comprising:
   in response to receiving the user interface functionality, performing an execution analysis of the user interface functionality based on the context of the industrial device, a set of user credentials associated with the user, the request, the user interface functionality, or a combination thereof.
Embodiment 7. The method of embodiment 6, wherein the execution analysis comprises:
   determining whether a breach is identified, wherein the determining comprises:
   blocking execution of the user interface functionality based on determining a breach is identified; and
   allowing execution of the user interface functionality based on determining no breach is identified.
Embodiment 8. The method of embodiment 1, wherein the context comprises a type of the industrial device, an operation performed by the industrial device in an industrial process, a parameter used by the industrial device, a status of the industrial device, connectivity of the industrial device to other industrial devices, standard operating procedures associated with the industrial device, historical audit data for the industrial device, past interaction information for the industrial device, or a combination thereof.
Embodiment 9. The method of embodiment 1, wherein the action comprises rendering modifications to the user interface, displaying a status in the user interface for the industrial device, determining a value for a metric of the industrial device, displaying a determined value for a metric of the industrial device in the user interface, triggering a process of the industrial device, triggering entry into a state of the industrial device, configuring a parameter of the industrial device, or a combination thereof.
Embodiment 10. An industrial automation device interface system, the system comprising:
   one or more processors; and
   one or more memories having stored thereon instructions that, upon execution by the one or more processors, cause the one or more processors to:
      receive, via a user interface, a request from a user, wherein the request is associated with an industrial device,
      process the request to identify an intent of the request based at least in part on a context of the industrial device,
      generate a prompt designed to elicit a response from a generative artificial intelligence (GAI) model, wherein the prompt comprises:
         the context of the industrial device; and
         a request to generate user interface functionality in the form of executable code for performing an action corresponding to the intent,
         receive, in response to submitting the prompt to the GAI model, the user interface functionality, and
         execute the user interface functionality.
Embodiment 11. The system of embodiment 10, wherein the instructions comprise further instructions that, upon execution by the one or more processors, cause the one or more processors to:
   search preprogrammed functionality for the user interface functionality, wherein the instructions to generate the prompt are in response to the search of the preprogrammed functionality returning a negative response.
Embodiment 12. The system of embodiment 10, wherein the request comprises a spoken request.
Embodiment 13. The system of embodiment 12, wherein the instructions to execute the user interface functionality comprises further instructions that, upon execution by the one or more processors, cause the one or more processors to:
   transmit, to a device providing the user interface, response instructions to emit a natural language audio signal associated with the user interface functionality via a speaker communicatively coupled to the device.
Embodiment 14. The system of embodiment 12, wherein the instructions comprise further instructions that, upon execution by the one or more processors, cause the one or more processors to:
   in response to receiving the spoken request, correlate a voice identified from the spoken request with the user and an associated set of user credentials for the user;
   authenticate the user based on the user credentials; and
   translate the spoken request to a textual request.
Embodiment 15. The system of embodiment 10, wherein the instructions comprise further instructions that, upon execution by the one or more processors, cause the one or more processors to:
   in response to receiving the user interface functionality, perform an execution analysis of the user interface functionality based on the context of the industrial device, a set of user credentials associated with the user, the request, the user interface functionality, or a combination thereof.
Embodiment 16. The system of embodiment 15, wherein the instructions to perform the execution analysis comprises further instructions that, upon execution by the one or more processors, cause the one or more processors to:
   determine whether a beach is identified, wherein the instructions to determine comprises:
      blocking execution of the user interface functionality based on determining a breach is identified; and
   allowing execution of the user interface functionality based on determining no breach is identified.
Embodiment 17. The system of embodiment 10, wherein the context comprises a type of the industrial device, an operation performed by the industrial device in an industrial process, a parameter used by the industrial device, a status of the industrial device, connectivity of the industrial device to other industrial devices, standard operating procedures associated with the industrial device, historical audit data for the industrial device, past interaction information for the industrial device, or a combination thereof.
Embodiment 18. The system of embodiment 10, wherein the action comprises rendering modifications to the user interface, displaying a status in the user interface for the industrial device, determining a value for a metric of the industrial device, displaying a determined value for a metric of the industrial device in the user interface, triggering a process of the industrial device, triggering entry into a state of the industrial device, configuring a parameter of the industrial device, or a combination thereof.
Embodiment 19. A computer-readable memory device having stored thereon instructions that, upon execution by one or more processors, cause the one or more processors to:
   receive, via a user interface, a request from a user, wherein the request is associated with an industrial device;
   process the request to identify an intent of the request based at least in part on a context of the industrial device;
   generate a prompt designed to elicit a response from a generative artificial intelligence (GAI) model, wherein the prompt comprises:
      the context of the industrial device, and
      a request to generate user interface functionality in the form of executable code for performing an action corresponding to the intent;
      receive, in response to submitting the prompt to the GAI model, the user interface functionality; and
      execute the user interface functionality.
Embodiment 20. The computer-readable memory device of embodiment 19, wherein the instructions comprise further instructions that, upon execution by the one or more processors, cause the one or more processors to:
   search preprogrammed functionality for the user interface functionality, wherein the instructions to generate the prompt are in response to the search of the preprogrammed functionality returning a negative response.

## Claims

1. A method, comprising:
receiving, via a user interface, a request from a user, wherein the request is associated with an industrial device;
processing the request to identify an intent of the request based at least in part on a context of the industrial device;
generating a prompt designed to elicit a response from a generative artificial intelligence (GAI) model, wherein the prompt comprises:
the context of the industrial device, and
a request to generate user interface functionality in the form of executable code for performing an action corresponding to the intent;
receiving, in response to submitting the prompt to the GAI model, the user interface functionality; and
executing the user interface functionality.

2. The method of claim 1, further comprising:
searching preprogrammed functionality for the user interface functionality, wherein the generating the prompt is in response to the searching the preprogrammed functionality returning a negative response.

3. The method of claim 1 or 2, wherein the request comprises a spoken request.

4. The method of claim 3, wherein executing the user interface functionality comprises:
transmitting, to a device providing the user interface, response instructions to emit a natural language audio signal associated with the user interface functionality via a speaker communicatively coupled to the device.

5. The method of claim 3, further comprising:
in response to receiving the spoken request, evaluating, by a voice recognition engine, the spoken request, wherein the evaluating comprises:
correlating a voice identified from the spoken request with the user and an associated set of user credentials for the user;
authenticating the user based on the user credentials; and
translating the spoken request to a textual request.

6. The method of one of claims 1 to 5, further comprising:
in response to receiving the user interface functionality, performing an execution analysis of the user interface functionality based on the context of the industrial device, a set of user credentials associated with the user, the request, the user interface functionality, or a combination thereof; and/or
wherein the execution analysis comprises:
determining whether a breach is identified, wherein the determining comprises:
blocking execution of the user interface functionality based on determining a breach is identified; and
allowing execution of the user interface functionality based on determining no breach is identified.

7. The method of one of claims 1 to 6, wherein the context comprises a type of the industrial device, an operation performed by the industrial device in an industrial process, a parameter used by the industrial device, a status of the industrial device, connectivity of the industrial device to other industrial devices, standard operating procedures associated with the industrial device, historical audit data for the industrial device, past interaction information for the industrial device, or a combination thereof; or
wherein the action comprises rendering modifications to the user interface, displaying a status in the user interface for the industrial device, determining a value for a metric of the industrial device, displaying a determined value for a metric of the industrial device in the user interface, triggering a process of the industrial device, triggering entry into a state of the industrial device, configuring a parameter of the industrial device, or a combination thereof.

8. An industrial automation device interface system, the system comprising:
one or more processors; and
one or more memories having stored thereon instructions that, upon execution by the one or more processors, cause the one or more processors to:
receive, via a user interface, a request from a user, wherein the request is associated with an industrial device,
process the request to identify an intent of the request based at least in part on a context of the industrial device,
generate a prompt designed to elicit a response from a generative artificial intelligence (GAI) model, wherein the prompt comprises:
the context of the industrial device; and
a request to generate user interface functionality in the form of executable code for performing an action corresponding to the intent,
receive, in response to submitting the prompt to the GAI model, the user interface functionality, and
execute the user interface functionality.

9. The system of claim8, wherein the instructions comprise further instructions that, upon execution by the one or more processors, cause the one or more processors to:
search preprogrammed functionality for the user interface functionality, wherein the instructions to generate the prompt are in response to the search of the preprogrammed functionality returning a negative response.

10. The system of claim 8 or 9, wherein the request comprises a spoken request.

11. The system of claim10, wherein the instructions to execute the user interface functionality comprises further instructions that, upon execution by the one or more processors, cause the one or more processors to:
transmit, to a device providing the user interface, response instructions to emit a natural language audio signal associated with the user interface functionality via a speaker communicatively coupled to the device; or
wherein the instructions comprise further instructions that, upon execution by the one or
more processors, cause the one or more processors to:
in response to receiving the spoken request, correlate a voice identified from the spoken request with the user and an associated set of user credentials for the user;
authenticate the user based on the user credentials; and
translate the spoken request to a textual request.

12. The system of one of claims 8 to 11, wherein the instructions comprise further instructions that, upon execution by the one or more processors, cause the one or more processors to:
in response to receiving the user interface functionality, perform an execution analysis of the user interface functionality based on the context of the industrial device, a set of user credentials associated with the user, the request, the user interface functionality, or a combination thereof; and/or
wherein the instructions to perform the execution analysis comprises further instructions that, upon execution by the one or more processors, cause the one or more processors to:
determine whether a beach is identified, wherein the instructions to determine comprises:
blocking execution of the user interface functionality based on determining a breach is identified; and
allowing execution of the user interface functionality based on determining no breach is identified.

13. The system of one of claims8 to 12, wherein the context comprises a type of the industrial device, an operation performed by the industrial device in an industrial process, a parameter used by the industrial device, a status of the industrial device, connectivity of the industrial device to other industrial devices, standard operating procedures associated with the industrial device, historical audit data for the industrial device, past interaction information for the industrial device, or a combination thereof; or
wherein the action comprises rendering modifications to the user interface, displaying a status in the user interface for the industrial device, determining a value for a metric of the industrial device, displaying a determined value for a metric of the industrial device in the user interface, triggering a process of the industrial device, triggering entry into a state of the industrial device, configuring a parameter of the industrial device, or a combination thereof.

14. A computer-readable memory device having stored thereon instructions that, upon execution by one or more processors, cause the one or more processors to:
receive, via a user interface, a request from a user, wherein the request is associated with an industrial device;
process the request to identify an intent of the request based at least in part on a context of the industrial device;
generate a prompt designed to elicit a response from a generative artificial intelligence (GAI) model, wherein the prompt comprises:
the context of the industrial device, and
a request to generate user interface functionality in the form of executable code for performing an action corresponding to the intent;
receive, in response to submitting the prompt to the GAI model, the user interface functionality; and
execute the user interface functionality.

15. The computer-readable memory device of claim14, wherein the instructions comprise further instructions that, upon execution by the one or more processors, cause the one or more processors to:
search preprogrammed functionality for the user interface functionality, wherein the instructions to generate the prompt are in response to the search of the preprogrammed functionality returning a negative response.
